# EUROPÄISCHE PATENTSCHRIFT

(11) **EP 3 293 460 B1**
(45) Veröffentlichungstag und Bekanntmachung des Hinweises auf die Patenterteilung: **17.06.2020**
(21) Anmeldenummer: 17189204.5
(22) Anmeldetag: 04.09.2017
(51) Int. Cl.: F24D 15/04, H02K 1/00

(54) **ANLAGE ZUR BEREITSTELLUNG VON WÄRMEENERGIE UND/ODER ELEKTRISCHEM STROM**
DEVICE FOR PROVIDING THERMAL ENERGY AND/OR ELECTRIC CURRENT
DISPOSITIF DE FOURNITURE DE CHAUFFAGE ET/OU DE COURANT ÉLECTRIQUE

(30) Priorität: 12.09.2016 CH 11802016
(43) Veröffentlichungstag der Anmeldung: 14.03.2018
(73) Patentinhaber: W. SCHMID PROJEKTE AG, 8152 Glattbrugg (CH)
(72) Erfinder: BALMER, Roger, 8360 Eschlikon (CH); SCHMID, Walter, 8049 Zürich (CH)
(74) Vertreter: Schneider Feldmann AG Patent- und Markenanwälte

(56) Entgegenhaltungen:
- EP-A2- 2 299 098
- WO-A1-88/03989
- WO-A1-2013/088356
- DE-A1- 3 912 113
- DE-A1-102012 106 894
- DE-U1-202005 009 663
- US-A1- 2004 016 245

## Beschreibung

### Technisches Gebiet

Die vorliegende Erfindung beschreibt eine Anlage zur Bereitstellung von Wärmeenergie und/oder elektrischem Strom an einen Verbraucher, umfassend einen Maschinenraum in dessen Innenraum mindestens ein Blockheizkraftwerk und mindestens eine Wärmepumpe angeordnet ist, wobei eine Steuerungsvorrichtung zur Steuerung des Betriebs der mindestens einen Wärmepumpe und des mindestens einen Blockheizkraftwerks ausserhalb des Maschinenraums angeordnet ist.

### Stand der Technik

Es besteht ein wachsender Bedarf an Anlagen und Einrichtungen zur effizienten Bereitstellung von Wärmeenergie an Verbraucher wie Wohn- und Geschäftshäuser, Schulen und vielerlei Gebäude öffentlicher oder privater Nutzung, wobei mit einem Minimum an Primärenergie ein Maximum von Energie in Form von Wärme und elektrischem Strom an den Verbraucher abgegeben werden soll. Insbesondere Aspekte der möglichst vollständigen und effizienten Nutzung der verfügbaren Primärenergien (flüssige und gasförmige Treibstoffe, Elektrizität) stehen dabei im Vordergrund. Zur Erreichung dieser Ziele werden häufig Wärmepumpen und Blockheizkraftwerke eingesetzt, welche in einem Maschinenraum platziert und darin betrieben werden.

Aus der EP 2 299 098 ist eine Anlage zur Bereitstellung von Wärmeenergie an einen Verbraucher bekannt. Die Anlage hat ein Blockheizkraftwerk, wobei das Blockheizkraftwerk in bekannter Weise einen Kühlwasserwärmetauscher zur Übernahme der Kühlwasserwärme aus dem Motorblock des Blockheizkraftwerks und einen Abgaswärmetauscher zur Übernahme der Abgaswärme des Blockheizkraftwerks in ein Heizsystem aufweist. Die Anlage gemäss EP 2 299 098 hat auch eine Wärmepumpe mit einem Solekreislauf zur Aufnahme von Wärmeenergie aus dem Boden, aus der Luft oder aus Wasser. Die Wärmepumpe dient zur Bereitstellung einer Grundlast an Wärmeenergie und das Blockheizkraftwerk dient zur Bereitstellung einer Spitzenlast an Wärmeenergie an den Verbraucher. Dabei ist das Blockheizkraftwerk bei einem festlegbaren Bivalenzpunkt zu der Wärmepumpe zuschaltbar. Weiterhin hat diese Anlage gemäss EP 2 299 098 auch eine Einrichtung zur Wärmerückgewinnung, mit der die Restwärmeleistung des Blockheizkraftwerkes und der Wärmepumpe ebenfalls dem Heizsystem zuführbar ist. Trotz positiven Betriebserfahrungen ist die Effizienzsteigerung der Anlage bzw. das Mass der vollständigen Nutzung der Primärenergie noch nicht auf dem maximal möglichen Niveau.

In der DE3912113 wird eine Anlage beschrieben, welche versucht die Verlustwärme von Blockheizkraftwerken möglichst vollständig zu nutzen, beziehungsweise diese soweit möglich ebenfalls dem Verbraucher zuzuführen. Darin wird überschüssige Wärme des Blockheizkraftwerk (BHKW) aus den Abgasen und des Kühlkreislaufes genutzt. Die Restwärmeleistung wird dabei von einer Wärmepumpe im Maschinenraum aufgenommen und an den Heizkreislauf abgegeben, wodurch die Effizienz erhöht wird. Da die Wärmepumpe im Maschinenraum angeordnet ist, resultiert hier eine erhöhte Effizienzsteigerung.

In der DE102012106894 wird eine Kompaktanlage zur Bereitstellung von Wärmeenergie beschrieben, welche eine erhöhte Energieeffizienz aufweist und mit einer Schwingungsdämpfung ausgerüstet ist, um störende Lärmbelästigungen zu verringern. Über einen im Maschinenraum angeordneten Luft/Flüssigkeitswärmetauscher ist Abwärme des Blockheizkraftwerks und der Wärmepumpe als zusätzliche Wärmequelle der Wärmepumpe zuführbar.

Die erreichte Energieeffizienz ist aber immer noch verbesserungsbedürftig ist.

### Darstellung der Erfindung

Die vorliegende Erfindung hat sich zur Aufgabe gestellt eine Anlage zur Bereitstellung von Wärmeenergie und elektrischem Strom, die ein Blockheizkraftwerk und eine Wärmepumpe in einer Maschine umfasst, anzugeben, deren Effizienz im Vergleich zu bekannten derartigen Anlagen / Maschinen weiter gesteigert ist.

Es sollte erreicht werden, dass die in die Anlage / Maschine eingebrachte Primärenergie effizienter in Wärme und elektrischen Strom umgesetzt wird und so entweder Primärenergie gespart und / oder der Ertrag entsprechend erhöht wird.

Diese Aufgabe erfüllt eine Anlage / Maschine gemäss Anspruch 1, wobei die Wärmerückgewinnung der Restwärmeleistung des Blockheizkraftwerks und der Wärmepumpe innerhalb des Maschinenraums durch bauliche Massnahmen maximiert ist und entsprechend effizienter Strom und Wärme aus einem Brennstoff und/oder einer der Wärmepumpe zugeführten Wärmequelle erzeugbar ist.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

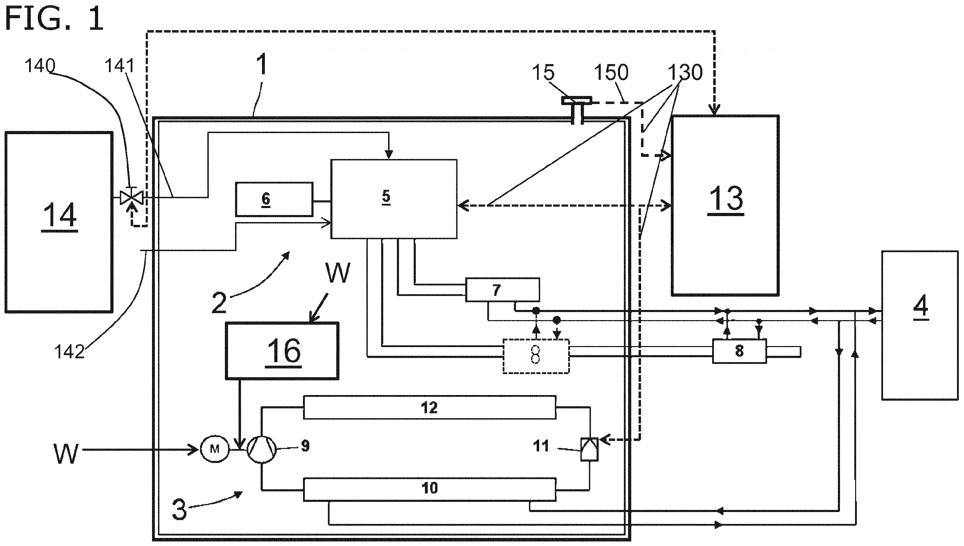

- Figur 1: zeigt eine schematische Ansicht der erfindungsgemässen Anlage / Maschine.

### Beschreibung

Die Figur 1 zeigt in schematischer Weise einen Maschinenraum 1, in dem ein Blockheizkraftwerk 2 und eine Wärmepumpe 3 angeordnet sind. Das Blockheizkraftwerk 2 und die Wärmepumpe 3, innerhalb des Maschinenraums 1 bilden eine Anlage / komplette Maschine zur Bereitstellung von Wärmeenergie in der Form von Warmwasser an einen Verbraucher, beispielsweise eine Heizung 4 und zur Bereitstellung von elektrischem Strom zur Netzeinspeisung und / oder zur Eigennutzung Das Blockheizkraftwerk 2 umfasst in bekannter Weise einen Motor 5, einen Generator 6, mindestens einen Kühlwasserwärmetauscher 7 und mindestens einen Abgaswärmetauscher 8, wobei der letztere im dargestellten Ausführungsbeispiel ausserhalb und/ oder innerhalb des Maschinenraumes 1 angeordnet ist. Die Abgase des Blockheizkraftwerks 2 werden aus dem Maschinenraum 1 hinausgeführt, wobei ein Teil der Wärmeenergie mittels Abgaswärmetauscher 8 genutzt wird und dem Verbraucher 4 zugeführt wird. Das Blockheizkraftwerk 2 ist eine modular aufgebaute Anlage und dient zur Erzeugung von elektrischem Strom und Wärme nach dem Prinzip der Wärme-Kraft bzw. Kraft-Wärme-Kopplung.

Mit der Verwendung eines Blockheizkraftwerkes 2 lässt sich bekanntlich gegenüber der herkömmlichen Kombination von lokaler Heizung und zentralem Grosskraftwerk ein höherer Gesamtnutzungsgrad erzielen, der aus der Nutzung der Abwärme der Stromerzeugung direkt am Ort der Entstehung resultiert. Durch die ortsnahe Nutzung der Abwärme wird die eingesetzte Primärenergie sehr effizient genutzt, weshalb sich mit Blockheizkraftwerken 2 auch ein relativ hoher Anteil an Primärenergie einsparen lässt. Bei der vorliegenden Anlage / Maschine ist die Stromerzeugung mittels des Generators 6 nicht weiter und detaillierter ausgeführt.

Als Primärenergie zum Antrieb des Motors 5 dient vorzugsweise ein Gas- oder Flüssigtreibstoff, beispielsweise Flüssiggas, Erdgas, Biogas oder oder im Fall von Flüssigtreibstoff Heizöl , Biodiesel, Ethanol oder ein anderer Treibstoff aus einer erneuerbaren oder nicht erneuerbaren Energiequelle. Der Treibstoff für das BHKW 2 wird einem Brennstofftank 14 oder einer Leitungsgebundenen Energiequelle (z.B. Erdgas - Aufzählung ist nicht abschliessend)) entnommen und über eine Brennstoffleitung 141 dem BHKW 2 zugeführt, was über ein Ventil 140 und eine Brennstoffregelstrecke mit einem Anteil Verbrennungsluft gemischt passiert. Die Verbrennungsluft wird der Anlage / Maschine direkt von aussen zugeführt über eine Verbrennungsluftzufuhr 142 mit direktem Anschluss an das BHKW.

Die Wärmepumpe 3 umfasst in bekannter Weise einen motorgetriebenen Verdichter 9, der ein Arbeitsmedium in einem wärmepumpeninternen Kreislauf durch einen Verflüssiger 10, ein Entspannungsventil 11 und einen Verdampfer 12 zirkulieren lässt. Der Einfachheit halber ist hier kein Primärmediumkreislauf, beispielsweise ein Solekreislauf zum Bezug von verschiedenen Wärmequellen wie eingangs beschrieben der mit dem Verdampfer 12 gekoppelt ist, dargestellt. Mit dem Pfeil wird angedeutet, dass Wärmeenergie W in unterschiedlicher Form der Wärmepumpe 3 zugeführt wird. Detaillierter dargestellt ist hingegen der Sekundärmediumkreislauf, hier ein Warmwasserkreislauf, der mit dem Verflüssiger 10 gekoppelt ist, sowie dessen Vorlauf, der ebenso wie der Vorlauf aus dem Kühlwasserwärmetauscher 7 des Blockheizkraftwerkes 2, der Heizung 4 zugeführt wird.

Es ist vorgesehen, dass die Wärmepumpe 3 zum Bezug von Wärmeenergie W aus der Luft ausgebildet ist. Die Wärmepumpe 3 kann aber auch zusätzlich Wärmeenergie W aus Oberflächenwasser, Grundwasser, Prozesswasser, Erdwärmesonden, Erdregistern, Energiepfählen, Abluftrückkühlungen, Zuluftkühlungen, EDV-Kühlung oder Abgaskondensationsanlagen beziehen. Diese Aufzählung ist nicht abschliessend. Es sind grundsätzlich alle Wärmequellen erschliessbar, welche sich über einen Solekreis erschliessen lassen. Die Wärmepumpe 3 ist in Form einer Sole-Wasser-Wärmepumpe 3 ausgeführt. Die jeweils nötigen Gas- bzw. Flüssigkeitsleitungen des Wärmeenergieträgers sowie der thermischen Anschlussleitungen und der Verbrennungsluftwerden durch die Schalldämmverkleidung in das Maschinenrauminnere geführt.

Die Hauptkomponenten innerhalb des Maschinenraumes 1 sind also das Blockheizkraftwerk 2 und die Wärmepumpe 3 sowie die interne Wärmerückgewinnung aus der Abwärme der vorstehenden Komponenten und der sonstigen thermischen Verlustleistungen aus dem Betrieb der Maschine . Die Wärmepumpe 3 ist dazu vorgesehen, die Grundlast des Wärmebedarfes der Heizung 4 im Jahresverlauf zu decken, wobei das Blockheizkraftwerk 2 nur im Bedarfsfall zugeschaltet wird.

Mittels einer Steuerungsvorrichtung 13, von welcher Steuerleitungen 130 zum BHKW 2, zur Wärmepumpe 3 und zum Brennstofftank 14 bzw. Brennstoffversorgung führen, wird die Anlage gesteuert, bzw. geregelt. Durch die Steuerleitungen 130 können die aktuellen Betriebszustände des BHKWs 2 und der Wärmepumpe 3 ausgelesen werden und auch gewünschte Betriebsparameter vor Ort oder via Internet / eingestellt, bzw. überwacht werden. Mittels der Steuerungsvorrichtung 13 und oder einer unabhängingen zusätzlichen Sicherheitssteuerung ist auch die Zufuhr des Treibstoffes aus dem Brennstofftank 14 sicherheitstechnisch mit steuerbarem Ventil 140 abgesichert. Wenn Wärme erzeugt werden , oder als Regelenergie Strom verbraucht werden soll reicht in bestimmten Fällen der gesteuerte / geregelte Betrieb der Wärmepumpe 3 aus. Sobald Strom erzeugt und / oder zusätzliche thermische Energie auf einem höheren Temperaturniveau erzeugt werden soll, wird das BHKW 2 von der Steuerungsvorrichtung 13 zu- bzw. eingeschaltet.

Gemäss Stand der Technik wurden bislang die Anlagen einzeln oder in Kombination in luftdurchlässige bzw. entsprechend belüfteten Maschinenräume eingesetzt, damit nicht ungewollt explosive Gas/Luftgemische im Maschinenrauminneren auftreten können. Auch, wenn eine Anlage zur Bereitstellung von Wärmeenergie mit einem Blockheizkraftwerk und einer Wärmepumpe in einem Kellerraum als Maschinenraum eingebaut ist, ist dieser Maschinenraum luftdurchlässig und belüftet. Teilweise sind Vorschriften einzuhalten, die einen gut belüfteten Maschinenraum vorschreiben.

Hier wird nun erfindungsgemäss kein üblicher Maschinenraum verwendet sondern ein geschlossener Maschinenraum, ohne spezifische Öffnungen für die Belüftung. Der Maschinenraum 1 ist damit hermetisch verschlossen. Mit einem hermetischen Verschluss ist hier die Abdichtung des Maschinenraums 1 gegen das Entweichen von bevorzugt warmer Luft aus dem Innenraum gemeint, also ein luftundurchlässiger Maschinenraum 1. Im optimalen Fall kann aus dem Innenraum keine Luft entweichen. In der Realität ist ein vollständig luftundurchlässiger Verschluss nur schwer zu erreichen. Entscheidend ist, dass die Luft im Maschinenraum 1 nicht entweichen kann und die sich durch Strahlungswärme und andere Abwärmequellen aufgeheizte Luft im luftdicht verschlossenen Maschinenraum 1 zirkulieren kann, aber nicht ohne Weiteres aus diesem entweichen kann.

Während die Wände, als Schalldämmhaube ausgeführt, des Maschinenraums 1 bei geeigneter Materialwahl und Wandstärke für Luft weitgehend undurchlässig sind bzw. weitgehend luftundurchlässige Materialien gewählt sind, werden auch die Grenzflächen der Wände bzw. die Fugen zwischen den Wänden hermetisch dicht verschlossen. Dies kann beispielsweise durch Anbringung luftabdichteder Dichtstoffe wie z.B. selbstklebenden Dichtbänder aus PU oder Silikon oder verschiedenster Materialien in den Fugen geschehen.

Im Innenraum des Maschinenraums 1 kann die Luft zirkulieren, welche beim Betrieb der Wärmepumpe 3 und des Blockheizkraftwerkes 2 durch Wärmestrahlung der Geräte- und Leitungsoberflächen, der Gerätelüftung und durch Abstrahlung der Abgaswärme erwärmt wird. Diese aufgeheizte Luft kann aber aufgrund des hermetischen Verschlusses nicht aus dem Innenraum entweichen, sondern zirkuliert im Innenraum. Auch bei tiefen Umgebungstemperaturen am Aufstellungsort des Maschinenraums 1, kann die Wärmepumpe 3 somit im optimalen Temperaturbereich arbeiten, da ein Teil der Energie zum Betrieb der Wärmepumpe 3 als Wärmequelle aus der Raumluft entnommen und genutzt wird.

Die Abwärme des BHKW 2 und der Wärmepumpe 3 in Form von Strahlungswärme und Oberflächenwärme im Maschinenraum 1 wird über einen Luft/Wasserwärmetauscher 16 der Wärmepumpe 3 als zusätzliche Wärmequelle zugeführt. Durch den hermetischen Verschluss wird die Luft im Maschinenraum 1 durch Abstrahlungswärme der Wärmepumpe 3 und des Blockheizkraftwerkes 2 sowie der Abgaswärmetauscher und anderer sich im Maschinenraum befindlicher Komponenten maximal aufgeheizt, wobei kaum Wärmeenergie verlorengeht. Eine Luftzirkulation innerhalb des Maschinenraums 1, der ein nahezu geschlossenes System bildet, findet im gewissen Masse automatisch (natürlich) und / oder mittels Ventilator statt.

Um die Wärmeverluste durch aus dem Maschinenraum 1 ausströmende Luft weiter zu minimieren, werden verschliessbare, mit Dichtungen versehene Durchführungen für elektrische Zuleitungen sowie Gasleitungen, Abgasleitung und thermische Leitungen benutzt, sodass auch an den Durchgangsstellen der elektrischen Zu- bzw. Gasleitungen, thermischen Leitungen und der Abgasleitung die Luft nicht ungewünscht aus dem Maschinenrauminneren entweichen kann. Beispielsweise wird vor allem die Brennstoffleitung 141 in den hermetisch abgeschlossenen Maschinenraum 1 durch eine entsprechend hermetisch geschlossene Durchführung geführt.

Die Durchführungen queren die Wände des Maschinenraums 1, wobei die Leitungen entsprechend den Innenraum der Durchführung queren, wobei der Maschinenraum 1 weiterhin als hermetisch verschlossen bezeichnet werden kann.

Damit die Betriebssicherheit gewährleistet werden kann, wird am bzw. im Maschinenraum 1 bzw. an bzw. in einer Maschinenraumwand eine Gaswarneinrichtung installiert, welche aus mindestens einem Gassensor 15 besteht, welcher mittels mindestens einer Gaswarnleitung 150 mit der Steuerungsvorrichtung 13 oder einer separaten Steuereinheit für die Alarmierung und Notausauslösung verbunden ist. Der mindestens eine Gassensor 15 wird derart installiert, dass er die aktuelle Zusammensetzung der Luft im Maschinenrauminnenraum messen kann. Mittels Gassensor 15 kann die Gaskonzentration bzw. Gas/LuftKonzentration im Maschinenraum 1 kontinuierlich überwacht werden. Sollte der Gassensor 15 im Betrieb eine steigende Brennstoff- Luftkonzentration innerhalb der Maschine detektieren wird die Anlage / Maschine umgehend mittels Notaus ausgeschaltet und stromlos geschaltet. Damit ist die Zündquelle innerhalb der Maschine eliminiert. Bei der Notabschaltung werden gleichzeitig sämtliche angeschlossene Brennstoffventile dicht verschlossen und ein Austreten von weiterem Brennstoff zuverlässig vermieden. Eine weitere Aufkonzentrierung eines allenfalls gefährlichen Brennstoff-Luftgemisches kann so mit an Sicherheit grenzender Wahrscheinlichkeit ausgeschlossen werden.

Als Gassensor 15 kommen verschiedene kommerziell erhältliche Modelle, basierend auf unterschiedlichen physikalischen Effekten, in Frage.

Das Blockheizkraftwerk 2 und die erste Wärmepumpe 3 sind vorzugsweise platzsparend übereinander angeordnet, wodurch eine ganzheitliche Maschine ausbildbar ist und die Abwärmenutzung weiter optimiert wird.

Die Steuerungsvorrichtung 13 wählt bei einem vorgegebenen Bivalenzpunkt den effizientesten Energieerzeuger, BHKW 2 oder Wärmepumpe 3, innerhalb des hermetisch abgeschlossenen Maschinenraums 1 aus. Mittels Steuerungsvorrichtung 13 wird entweder wärmegeführt, stromgeführt oder in Kombination die entsprechende Energieform prioritär zur Verfügung gestellt. Durch die Steuerungsvorrichtung 13 ist die Anlage optional auch als Notstromaggregat einsetzbar.

Es wird eine Sole-Wasser-Wärmepumpe 3 eingesetzt, wobei die Wärmepumpe 3 dazu offen verbaut wird, sodass möglichst die gesamte Abwärme der Wärmepumpe in das Maschinenrauminnere abgestrahlt wird.

### Bezugszeichenliste

- 1: Maschinenraum
- 2: Blockheizkraftwerk (BHKW)
- 3: Wärmepumpe
- 4: Heizung (Verbraucher)
- 5: Motor
- 6: Generator
- 7: Kühlwasserwärmetauscher
- 8: Abgaswärmetauscher (ausserhalb und/oder innerhalb)
- 9: Verdichter
- 10: Verflüssiger
- 11: Entspannungsventil
- 12: Verdampfer
- 13: Steuerungsvorrichtung
- 130: Steuerleitungen
- 14: Brennstofftank (Primärenergie)
- 140: Ventil
- 141: Brennstoffleitung
- 142: Verbrennungsluftzufuhr mit direktem Anschluss an das BHKW
- 15: Gassensor
- 150: Gaswarnleitung
- 16: Luft/Flüssigkeits (Wasser oder Sole)-wärmetauscher
- W: Wärmeenergie

## Patentansprüche

1. Anlage zur Bereitstellung von Wärmeenergie und/oder elektrischem Strom an einen Verbraucher (4), umfassend einen Maschinenraum (1) in dessen Innenraum mindestens ein Blockheizkraftwerk (2) und mindestens eine Wärmepumpe (3) angeordnet sind, wobei eine Steuerungsvorrichtung (13) zur Steuerung des Betriebs der mindestens einen Wärmepumpe (3) und des mindestens einen Blockheizkraftwerks (2) ausserhalb des Maschinenraums (1) angeordnet ist,
**dadurch gekennzeichnet, dass**
der Maschinenraum (1) hermetisch abgedichtet ausgestaltet ist, wobei die Maschinenraumwände aus einem luftundurchlässigen Material bestehen, die Grenzflächen zwischen den Maschinenraumwänden luftdicht abgedichtet sind und Steuerleitungen (130), mindestens eine Brennstoffleitung (141) und mindestens eine Verbrennungsluftzufuhr (142) mittels luftdichter Durchführungen die Wände des Maschinenraums (1) queren, sodass die Abwärme des mindestens einen Blockheizkraftwerks (2) und der mindestens einen Wärmepumpe (3) in Form von Strahlungswärme und Oberflächenwärme im Maschinenraum (1) über einen Luft/Flüssigkeitswärmetauscher (16) der mindestens einen Wärmepumpe (3) als zusätzliche Wärmequelle zuführbar ist und in einer Wand des Maschinenraums (1) mindestens ein Gassensor (15) über eine Gaswarnleitung (150) mit der Steuerungsvorrichtung (13) verbunden angeordnet ist, sodass die Luft im Innenraum des Maschinenraums (1) während des Betriebs der Anlage analysierbar ist und die Anlage bei einem Fehler mittels Steuerungsvorrichtung (13) automatisch stromlos geschaltet werden kann und/oder die Zufuhr eines Brennstoffes aus einem Brennstofftank (14) abschaltbar ist.

2. Anlage nach Anspruch 1, wobei der Brennstoff mittels eines Ventils (140), welches im Verlauf der Brennstoffleitung (141) ausserhalb des Maschinenraums (1) angeordnet ist, und durch die Steuerungsvorrichtung (13) steuerbar zugeführt wird.

3. Anlage gemäss einem der vorhergehenden Ansprüche, wobei mindestens ein Teil der Abgaswärme des mindestens einen Blockheizkraftwerks (2) mittels eines Abgaswärmetauschers (8) innerhalb und/oder ausserhalb des Maschinenraums (1) nutzbar ist und dem Verbraucher (4) zuführbar ist und/oder von der mindestens einen Wärmepumpe (3) direkt oder indirekt nutzbar ist.

4. Anlage gemäss Anspruch 3, wobei der mindestens eine Abgaswärmetauscher (8) ausserhalb des Maschinenraums (1) angeordnet ist.

5. Anlage gemäss einem der vorhergehenden Ansprüche, wobei als Primärenergieträger für das Blockheizkraftwerk (2) Flüssiggas, Erdgas, Biogas oder im Fall von Flüssigtreibstoff Heizöl, Biodiesel oder Ethanol einsetzbar ist.

6. Anlage gemäss einem der vorhergehenden Ansprüche, wobei die mindestens eine Wärmepumpe (3) einerseits mittels Wärmeenergie (W) aus der Luft innerhalb des Maschinenraums (1) mit einem Luft/Solewärmetauscher betreibbar ist und als Sole-Wasser-Wärmepumpe (3) ausgebildet ist, deren Solekreislauf zum Bezug von Wärmeenergie aus verschiedenen, mittels einer Sole nutzbaren Energiequelle mit einem Verdampfer (12) gekoppelt ist.

7. Anlage gemäss einem der vorhergehenden Ansprüche, wobei die Maschinenraumwände eine Schalldämmhaube bilden, wobei die Fugen zwischen den Wänden hermetisch dicht verschlossen sind.

8. Verwendung einer Anlage gemäss einem der Ansprüche 1 bis 7, wobei das Blockheizkraftwerk (2) mittels Steuerungsvorrichtung (13) aktivierbar ist, um im Bedarfsfall elektrischen Strom zu produzieren und als Notstromaggregat nutzbar ist.

## Claims

1. An installation for providing thermal energy and/or electric current to a consumer (4), comprising a machine chamber (1) in the interior of which are arranged at least one cogeneration unit (2) and at least one heat pump (3), wherein a control device (13) for controlling the operation of the at least one heat pump (3) and the at least one cogeneration unit (2) is arranged outside the machine chamber (1), **characterized in that** the machine chamber (1) is hermetically sealed, wherein the machine chamber walls consist of an air-impermeable material, the boundary areas between the machine chamber walls are sealed air-tight, and control lines (130), at least one fuel line (141) and at least one combustion air supply (142) pass through the walls of the machine chamber (1) by means of airtight passages, such that the waste heat of the at least one cogeneration unit (2) and the at least one heat pump (3) can be transferred to the at least one heat pump (3) as an additional heat source in the form of radiant heat and surface heat in the machine chamber (1) via an air/liquid heat exchanger (16), and **in that** at least one gas sensor (15) connected to the control device (13) via a gas alert line (150) is arranged in a wall of the machine chamber (1), such that the air in the interior of the machine chamber (1) can be analysed during the operation of the installation and, in the event of a failure, the installation can be automatically disconnected from the electric power supply by means of the control device (13) and/or the supply of a fuel from a fuel tank (14) can be switched off.

2. The installation according to Claim 1, wherein the fuel is supplied by means of a valve (140), which is arranged in the path of the fuel line (141) outside the machine chamber (1), and which is controllable by the control device (13).

3. The installation according to any one of the preceding claims, wherein at least a portion of the exhaust heat of the at least one cogeneration unit (2) can be used by means of an exhaust gas heat exchanger (8) within and/or outside of the machine chamber (1) and can be supplied to the consumer (4), and/or can be used directly or indirectly by the at least one heat pump (3) .

4. The installation according to Claim 3, wherein the at least one exhaust gas heat exchanger (8) is arranged outside of the machine chamber (1).

5. The installation according to any one of the preceding claims, wherein liquefied gas, natural gas, biogas or - in the case of liquid fuel - heating oil, biodiesel or ethanol can be used as primary energy sources for the cogeneration unit (2).

6. The installation according to any one of the preceding claims, wherein the at least one heat pump (3) can be operated by means of thermal energy (W) from the air within the machine chamber (1) via an air/brine heat exchanger and is designed as a brine/water heat pump (3), the brine circuit of which is coupled with an evaporator (12) for obtaining thermal energy from various energy sources usable by means of a brine.

7. The installation according to any one of the preceding claims, wherein the machine chamber walls form a sound-insulating housing, wherein the joints between the walls are hermetically sealed.

8. An application of an installation according to any one of Claims 1 to 7, wherein the cogeneration unit (2) can be activated by means of a control device (13) in order to produce electric current as needed and can be used as an emergency generator.

## Revendications

1. Installation pour la mise à disposition d'énergie thermique et/ou de courant électrique au niveau d'un consommateur (4), comprenant une salle des machines (1) dans l'espace intérieur de laquelle au moins une centrale de cogénération (2) et au moins une pompe à chaleur (3) sont disposées, dans laquelle un dispositif de commande (13) pour la commande du fonctionnement de l'au moins une pompe à chaleur (3) et de l'au moins une centrale de cogénération (2) est disposé à l'extérieur de la salle des machines (1), **caractérisée en ce**
**que** la salle des machines (1) est réalisée de façon hermétiquement étanche, dans laquelle les parois de salle des machines se composent d'un matériau imperméable à l'air, les surfaces de délimitation entre les parois de salle des machines sont étanchéifiées de façon étanche à l'air, et que des lignes pilote (130), au moins une conduite de combustible (141), et au moins une admission d'air de combustion (142) traversent au moyen de passages étanches à l'air les parois de la salle des machines (1), de sorte que la chaleur perdue de l'au moins une centrale de cogénération (2) et de l'au moins une pompe à chaleur (3) peut être amenée sous la forme de chaleur rayonnante et de chaleur de surface dans la salle des machines (1) via un échangeur de chaleur liquide/air (16) de l'au moins une pompe à chaleur (3) en tant que source de chaleur supplémentaire, et que dans une paroi de la salle des machines (1), au moins un détecteur de gaz (15) est disposé de façon relié au dispositif de commande (13) via une ligne d'alerte au gaz (150), de sorte que l'air dans l'espace intérieur de la salle des machines (1) peut être analysé pendant le fonctionnement de l'installation et qu'en cas d'erreur, l'installation peut automatiquement être mise hors tension au moyen du dispositif de commande (13) et/ou l'alimentation d'un combustible à partir d'un réservoir de combustible (14) peut être coupée.

2. Installation selon la revendication 1, dans laquelle le combustible est amené au moyen d'une soupape (140), laquelle est disposée dans le tracé de la conduite de combustible (141) à l'extérieur de la salle des machines (1), et de manière à pouvoir être commandée par le dispositif de commande (13).

3. Installation selon l'une des revendications précédentes, dans laquelle au moins une partie de la chaleur de gaz d'échappement de l'au moins une centrale de cogénération (2) est utilisable au moyen d'un échangeur de chaleur de gaz d'échappement (8) à l'intérieur et/ou à l'extérieur de la salle des machines (1) et peut être amenée au consommateur (4) et/ou est utilisable directement ou indirectement par l'au moins une pompe à chaleur (3).

4. Installation selon la revendication 3, dans laquelle l'au moins un échangeur de chaleur de gaz d'échappement (8) est disposé à l'extérieur de la salle des machines (1).

5. Installation selon l'une des revendications précédentes, dans laquelle on peut utiliser, en tant que ressource énergétique primaire pour la centrale de cogénération (2), du gaz liquéfié, du gaz naturel, du biogaz, ou dans le cas de propergol liquide, du fuel, du biodiesel ou de l'éthanol.

6. Installation selon l'une des revendications précédentes, dans laquelle l'au moins une pompe à chaleur (3) peut fonctionner d'une part au moyen d'énergie thermique (W) à partir de l'air à l'intérieur de la salle de machines (1) avec un échangeur de chaleur air/saumure, et est réalisée en tant que pompe à chaleur saumure-eau (3) dont le circuit de saumure, pour la réception d'énergie thermique à partir de différentes sources d'énergie utilisables au moyen de saumure, est couplé avec un évaporateur (12).

7. Installation selon l'une des revendications précédentes, dans laquelle les parois de salle des machines forment un capot insonorisant, dans laquelle les jointures entres les parois sont fermées hermétiquement de façon étanche.

8. Utilisation d'une installation selon l'une des revendications 1 à 7, dans laquelle la centrale de cogénération (2) est activable au moyen d'un dispositif de commande (13) afin de produire du courant électrique en cas de besoin, et est utilisable en tant que groupe électrogène.
